# EUROPÄISCHE PATENTSCHRIFT

(11) **EP 2 513 916 B1**
(45) Veröffentlichungstag und Bekanntmachung des Hinweises auf die Patenterteilung: **05.08.2015**
(21) Anmeldenummer: 10803044.6
(22) Anmeldetag: 14.12.2010
(51) Int. Cl.: H01F 1/00, C09K 8/80, H01F 1/24

(54) **MAGNETISCHE KOMPOSITPARTIKEL**
MAGNETIC COMPOSITE PARTICLES
PARTICULES MAGNÉTIQUES COMPOSITES

(30) Priorität: 16.12.2009 DE 102009058650
(43) Veröffentlichungstag der Anmeldung: 24.10.2012
(73) Patentinhaber: Neotechnology LLC, Las Vegas, NV 89101 (US)
(72) Erfinder: ROGIN, Peter, 66113 Saarbrücken (DE); DE OLIVEIRA, Peter, William, 66111 Saarbrücken (DE); WÜHR, Christian, 66287 Quierschied (DE); VEITH, Michael, 66386 St.-Ingbert (DE); ESPIN, Douglas, 66130 Saarbrücken (DE)
(74) Vertreter: Patentanwälte Bernhardt / Wolff Partnerschaft
(86) Internationale Anmeldenummer: PCT/EP2010/007611
(87) Internationale Veröffentlichungsnummer: WO 2011/072838

(56) Entgegenhaltungen:
- DE-A1- 19 520 964
- US-A1- 2006 037 755
- US-A1- 2009 288 820

## Beschreibung

### Gebiet der Erfindung

Die Erfindung betrifft magnetische Kompositpartikel, sowie Verfahren zu ihrer Herstellung und ihre Verwendung.

### Stand der Technik

Im Stand der Technik sind viele magnetische Partikel bekannt, welche beispielsweise zur Abtrennung von biologischen Substanzen durch Absorption verwendet werden (z. B. EP 1 232 502 B1). Dabei werden vor allem Partikel im Nanometerbereich oder Mikrometerbereich eingesetzt (DE 196 14 136 A1). Solche Partikel werden in DE 199 40 220 A1 auch in der Krebstherapie zum selektiven magnetischem Heizen eingesetzt.

Außerdem ist die Beschichtung von Pigmenten im Sol-Gelverfahren aus DE 195 20 964 A1 bekannt.

US 2009/288820 A1 beschreibt Kompositpartikel mit geringen magnetischen Anteilen zur Vermessung von geologischen Strukturen.

Eine weitere wichtige Verwendung von Kompositmaterialien ist die Verwendung als Proppants. Dies sind Füllmaterialien für hydraulisch erzeugte Klüfte in unterirdischen Formationen, deren Verfüllung mit einem harten sphärischen Granulat einen stabilen Bereich mit hoher Durchlässigkeit für Flüssigkeiten wie z. B. Erdöl erzeugt.

### Aufgabe

Aufgabe der Erfindung ist es, magnetische Kompositpartikel bereitzustellen, welche es ermöglichen durch Anlegen eines Wechselfeldes eine gezielte Erwärmung zu erreichen.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht.

Die Erfindung betrifft magnetische Kompositpartikel, welche mindestens ein magnetisches Objekt und eine glasartige Binderphase umfassen.

Die Kompositpartikel weisen einen Durchmesser zwischen 0.2 bis 20 mm oder 0.3 bis 20 mm auf. Es können auch Kompositpartikel mit einem Durchmesser zwischen 1 und 50 mm, insbesondere zwischen 5 und 20 mm sein. Bevorzugt sind Partikel mit einem Durchmesser von über 1 mm.

Das mindestens eine magnetische Objekt kann unterschiedliche Formen aufweisen. Möglich sind plättchenförmige oder stabförmige magnetische Objekte, aber auch sphärische magnetische Objekte. Die magnetischen Objekte können aus einer kristallinen Phase bestehen aber auch mehrere verschiedene Phasen aufweisen.

Als magnetisch werden Materialien bezeichnet, die durch einen Magnet angezogen werden können, d.h. beispielsweise ferromagnetische oder superparamagnetische Materialien. Als magnetisch werden auch Materialien verstanden, welche als weich magnetische Materialien bezeichnet werden, z.B. Ferrite. Bevorzugt sind ferromagnetische Materialien.

Die magnetischen Objekte sind im allgemeinen Feststoffpartikel, die eine Teilchengröße von etwa 10 nm bis etwa 500 µm aufweisen, bevorzugt zwischen 0.5 µm und 200 µm, besonders bevorzugt zwischen 0.5 und 20 µm. Dabei beträgt das Verhältnis der Durchmesser der magnetischen Objekte im Verhältnis zum Durchmesser der Kompositpartikel bevorzugt über 1:10, insbesondere zwischen 1:10 und 1:10000, bevorzugt zwischen 1:500 und 1:5000.

Die Größenangaben beziehen sich dabei auf die Gesamtheit der im Kompositpartikel enthaltenen Objekte, wobei wenigstens 90 Gew.-% der Objekte die o. g. Größenangaben erfüllen sollen.

In einer bevorzugten Ausführungsform der Erfindung weisen die magnetischen Objekte daher mindestens ein Element ausgewählt aus der Gruppe bestehend aus Fe, Co, Ni, Cr, Mo, W, V, Nb, Ta, Ce, Pr, Nd, Pm, Sm, Eu, Gd, Tb, Dy, Ho, Er, Tm, Yb, Lu, Legierungen aus zwei oder mehr der genannten Elemente, Oxiden der genannten Elemente oder Ferriten der genannten Elemente, oder ein Gemisch aus zwei oder mehr davon, auf. Beispielsweise können die magnetische Objekte Magnetit, Macchiemit, Goethit oder ein Ferrit der allgemeinen Formel MFe₂O₄, wobei M für ein Element ausgewählt aus der Gruppe bestehend aus Cr, Ga, Cd, Mg, Mn, Li, Ca, Ni, Co, Cu, Zn, Zr oder Fe(II) steht, oder ein Gemisch aus zwei oder mehr davon, enthalten.

Weiterhin zum Einsatz als magnetische Objekte im Rahmen der vorliegenden Erfindung geeignet sind Werkstoffe wie Wolframit (FeMnWO₄), Ferberit (FeWO₄), dauermagnetische Aluminium-Nickel-Cobalt Legierungen, die als Hauptbestandteile Eisen, Cobalt, Nickel, Aluminium, Kupfer oder Titan oder Gemische aus zwei oder mehr davon enthalten. Weiterhin sind Legierungen aus Platin und Cobalt, Legierungen aus Eisen, Cobalt, Vanadium und Chrom, Ludwigit (Mg₂Fe³⁺[O₂/BO₄), Vonsenit (Fe₂²⁺Fe³⁺[O₂/BO₃]), Ko-baltnickelkiese der allgemeinen Formel A²⁺B³⁺₂X²⁻₄ worin A für Eisen, Cobalt, Nickel oder Kupfer steht, B für Eisen, Cobalt, Nickel oder Chrom oder ein Gemisch aus zwei oder mehr davon und X für S. Se oder Te oder ein Gemisch aus zwei oder mehr davon steht, Eisenoxide wie Eisen (II)-Oxid (FeO) oder Eisen (III)-Oxid (Fe₂O₃) in seiner ferromagnetischen Modifikation, γ-Fe₂O₃ (Macchiemit) mit Spinell, Magnetit (Fe₃O₄), Cobaltlegierungen wie die üblicherweise als Hochtemperaturwerkstoffe eingesetzten Legierungen mit Co-Cr-Matrix, Ni-Fe-Al-Co-Gusslegierungen mit bis zu etwa 36 Gew.-% Cobalt, Legierungen des Typs CoCrW, Chrom (IV)-Oxid (CrO₂), die der Gruppe der Ferrite zuzuordnenden oxidkeramischen Werkstoffe der allgemeinen Zusammensetzung M₂Fe³⁺₂O₄ oder M²⁺Fe₂O₄ die permanente magnetische Dipole enthalten, wobei M für Zink, Cadmium, Cobalt, Mangan, Eisen, Kupfer, Magnesium und dergleichen steht, sowie Eisen selbst, geeignet.

Mit Vorteil besteht das mindestens eine magnetische Objekt aus einem ternäres Eisenoxid aus der Klasse der Weichferrite. Dies sind bevorzugt Eisenoxide der Formel MFe₂O₄, wobei M ausgewählt ist aus der Gruppe Cr, Ga, Cd, Mg, Mn, Li, Ca, Ni, Co, Cu, Zn, Zr oder Fe(II). Dabei können auch Mischungen der Ferrite eingesetzt werden, bevorzugt ist M ausgewählt aus der Gruppe Mg, Mn, Ni, Co, Cu, Zn oder Fe(II).

Die Dichte der magnetischen Objekte liegt zwischen 3 und 10 g/cm³, bevorzugt zwischen 4 und 6 g/cm³.

Bei der glasartigen Binderphase kann es sich um eine beliebige glasbildende Zusammensetzung handeln, die mit den magnetischen Objekten kompatibel ist, d.h. die magnetischen Eigenschaften nicht z. B. durch die Bildung fester Lösungen zerstört.

Unter einer glasartigen Phase im Sinne der vorliegenden Erfindung wird ein siliziumhaltiges amorphes Material verstanden. Die Phase kann weitere Materialien enthalten, z.B. B₂O₃ (0-30 Gew.-%), Al₂O₃ (0-20 Gew.-%), CaO (0-20 Gew.-%), BaO (0-10 Gew.-%), K₂O (0-20 Gew.-%), Na₂O (0-70 Gew.-%), MgO (0-18 Gew.-%), Pb₂O₃ (0-15 Gew.-%). Die Phase kann also einen kleineren Anteil (0-5 Gew.-%) anderer Oxide enthalten, wie Mn₂O₃, TiO₂, As₂O₃, Fe₂O₃, CuO, CoO, etc.

Bei der glasartigen Binderphase kann es sich auch um eine übliche Einkomponenten- oder Mehrkomponenten-Glaszusammensetzung handeln. Diese sind beispielsweise aus DE 195 20 964 A1 bekannt. Geeignete Einkomponentensysteme sind z. B. SiO₂, TiO₂ und ZrO₂. Verwendbare Mehrkomponentensysteme sind z. B. Zweikomponentensysteme wie 70-90 Gew.-% SiO₂/10-30 Gew.-% B₂O₃; Dreikomponentensysteme wie PbO/B₂O₃/SiO₂ und P₂O₅/B₂O₃/SiO₂; und Vierkomponentensysteme wie 65-92 Gew.-% PbO/S-20 Gew.-% B₂O₃/2-10 Gew.-% SiO₂/1-5 Gew.-% ZnO. Weitere Beispiele für geeignete Glaszusammensetzungen sind bei C. J. Brinker, G. W. Scherer: "Sol-Gel Science - The Physics and Chemistry of Sol-Gel-Processing", Academic Press, Boston, San Diego, New York, Sydney (1990) und in den DE 19 41 191, DE 37 19 339, DE 41 17 041 und DE 42 17 432 genannt.

Geeignete glasartige Binderphasen sind beispielsweise Kalk-Natrongläser (SiO₂ / CaO (0-20 Gew.-%) / Na₂O (0-70 Gew.-%)), wobei der Gehalt an Na₂O bevorzugt über 40 Gew.-% liegt.

Mit Vorteil weisen die magnetischen Kompositpartikel, d.h. die magnetischen Objekte und die Binderphase eine geringe Porosität auf. Der Volumenanteil eventuell vorhandener Poren am gesamten Kompositpartikel sollte unter 30 %, mit Vorteil unterhalb von 20 % liegen.

Mit Vorteil enthalten die Kompositpartikel einen Anteil von über 60 Gew.-% an den magnetischen Objekten. Der Anteil liegt zwischen 1:1 und 4:1, bevorzugt zwischen 1.5:1 und 3:1 (Gewichtsanteile magnetische Objekte : Binderphase). Ein Kompositpartikel umfasst bevorzugt mehrere magnetische Objekte.

Die Kompositpartikel sind idealerweise kugelförmig.

In einer weiteren Ausführungsform sind die Kompositpartikel mit einer glasartigen Schicht beschichtet. Für diese Schicht können die Zusammensetzungen für die Binderphase verwendetet werden. Dabei können die Partikel mit der gleichen Phase beschichtet werden, welche als Binderphase verwendet wurde. Durch die Beschichtung kann die empfindliche magnetische Phase der Kompositpartikel gegen äußere Einflüsse geschützt werden.

Die Beschichtung der Kompositpartikel weist bevorzugt eine Dicke von über 0.5 µm auf, insbesondere über 1 µm. Bevorzugt ist eine Dicke zwischen 0.5 bis 20 µm, besonders bevorzugt zwischen 1 und 5 µm.

Mit Vorteil weist die Beschichtung eine geringe Porosität auf. Insbesondere bilden die Poren, soweit vorhanden, kein zusammenhängendes Netzwerk, d.h., es handelt sich nur um geschlossene Porosität. Dies wird insbesondere dadurch erreicht, dass eine eventuelle Wärmebehandlung der Beschichtung bei einer Temperatur durchgeführt wird, welche oberhalb der Erweichungstemperatur (Tg-Temperatur) der Beschichtung liegt.

Die Erfindung betrifft außerdem ein Verfahren zur Herstellung von den erfindungsgemäßen magnetischen Kompositpartikeln.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen. Im ersten Schritt Herstellen einer Zusammensetzung aus mindestens einem magnetischem Objekt und/oder einem Precursor für ein magnetisches Objekt und mindestens einem Precursor einer glasartigen Binderphase. Dabei wird unter einem Precursor jegliche Verbindung oder Zusammensetzung verstanden, welche unter einer physikalischen (Phasentransformation, Schmelzen) und/oder chemischen Transformation (Oxidation, Reduktion, Kondensation, Polymerisation) in die gewünschten magnetischen Objekte oder Binderphasen überführt werden können. Dies können Lösungen, Flüssigkeiten oder Pulver sein. Bevorzugt handelt es sich um Pulver. Dabei können die Pulver auch schon bereits die Struktur, z.B. die kristalline Struktur, der Phase aufweisen, welche sie im den Kompositpartikeln besitzen. So können beispielsweise bereits Pulver bestehend aus den magnetischen Objekten verwendet werden, welche mit einem Pulver zur Bildung der Binderphase vermischt werden.

Die jeweiligen Pulver können übliche Methoden, z.B. Fällung, Sol-Gel-Verfahren, erhalten werden. Die Pulver können auch schon gesintert und/oder wärmebehandelt sein. Die Teilchengröße der eingesetzten Pulver kann im Bereich von 0.5 und 1000 µm, bevorzugt zwischen 1 bis 100 µm liegen.

Aus der Zusammensetzung wird ein Granulat hergestellt. Dabei kann die Formgebung auf unterschiedliche Weise erfolgen. Zum einen können im Falle von Pulvern durch Kompaktierung geschehen oder durch Trocknen einer flüssigen oder pastösen Masse, wie einer Suspension oder einem Schlicker. Dazu kann es erforderlich sein Lösungsmittel oder organische Bindemittel zuzugeben (0 bis 40 Gew.-%). Solche Verfahren sind dem Fachmann bekannt. Das Granulat kann dann durch Pelletierung mittels eines Pelletiertellers oder eines Intensivmischers oder durch Formenpressen oder im Falle einer Paste durch Wirbelschichtgranulation, Extrusion oder Schlickerguss erhalten werden.

Das erhaltene Granulat wird danach wärmebehandelt, wobei sich die glasartige Binderphase und ggf. die magnetischen Objekte bilden, bzw. bildet.

In einer weiteren Ausführungsform wird die Wärmebehandlung bei über 500 °C durchgeführt, bevorzugt bei über 800 °C, beispielsweise zwischen 800 °C und 1400 °C, bevorzugt zwischen 1000 °C und 1200 °C. Dabei hängt die Temperatur von der Sintertemperatur der magnetischen Objekte und von der Schmelztemperatur der Binderphase ab. Bevorzugt wird die Wärmebehandlung oberhalb der Schmelztemperatur der Binderphase, bei mindestens der Sintertemperatur der magnetischen Objekte durchgeführt. Wenn die magnetischen Objekte schon bei der Formgebung vorliegen, z.B. bereits in der magnetischen Phase, kann die Wärmebehandlung auch zwischen der Schmelztemperatur der Binderphase und der Sintertemperatur der magnetischen Objekte durchgeführt werden.

Die Wärmebehandlung kann auch bei besonderer Atmosphäre (inert, reduzierend oder oxidierend) durchgeführt werden. Die Dauer der Wärmebehandlung kann zwischen 30 Minuten und 10 Stunden liegen.

Das wärmebehandelte Granulat weist einen Durchmesser von 0.2 bis 20 mm auf. Es können auch Kompositpartikel mit einem Durchmesser zwischen 0.3 und 50 mm, insbesondere zwischen 5 und 20 mm sein.

In einer weiteren Ausführungsform wird das wärmebehandelte Granulat in einem weiteren Schritt mit mindestens einem Vorläufer für eine glasartige Schicht beschichtet und danach wärmebehandelt. Dabei können die gleichen Vorläufer verwendet werden, welche auch für die Binderphase verwendet werden. Es handelt sich dabei um Pulver. Um diese für Beschichtungen verwenden zu können, kann es nötig sein, ein weiteres Bindemittel, beispielsweise ein Sol (z.B. gemäß DE 197 14 949 A1) zu verwenden. Die kann beispielsweise ein Natrium-Silikatsol sein. Bei der Wärmebehandlung verbindet sich dieses mit dem Pulver zu einem Film. Die Wärmebehandlung wird bei Temperaturen von über 500 °C durchgeführt, bevorzugt über 600 °C. Sie kann auch bei den gleichen Temperaturen durchgeführt werden, welche bei der Bildung der Binderphase verwendet werden können. Abhängig von der Beschichtung kann auch die gleiche Temperatur verwendet werden, damit es zu einer Verbindung der Beschichtung und der Binderphase kommt.

Es ist auch möglich, dass die Wärmebehandlung der Beschichtung und der Binderphase gemeinsame durchgeführt werden. Dadurch kann eine bessere Verbindung der Binderphase und der Beschichtung erreicht werden, wenn z. B. das Pulver der Beschichtung auf die noch nicht wärmebehandelten magnetischen Kompositpartikel aufgebracht wird.

Durch die Verwendung von Pulvern wird gerade bei der Größe der Kompositteilchen eine deutliche dichtere und stabilere Beschichtung erreicht, als z.B. durch ein Aufwachsen der Beschichtung in einem Sol oder durch Sprühtrocken (DE 195 20 964 A1).

Die Erfindung betrifft außerdem ein Verfahren zur Abtrennung oder Extraktion von flüssigen Anteilen aus geologischen Formationen oder partikulären Materialien.

Dazu werden die erfindungsgemäßen Kompositpartikel, bevorzugt die beschichteten Kompositpartikel in eine geologische Formation oder partikuläre Materialien eingebracht. Dies kann beispielsweise durch Vermischen geschehen oder durch Verfüllung eines Bohrlochs. Durch die bevorzugt sphärische Form der Kompositpartikel sind ausreichend Zwischenräume zum Durchtritt der flüssigen oder verflüssigbaren Anteile vorhanden.

In einem nächsten Schritt wird an die Kompositpartikel ein magnetisches Wechselfeld angelegt. Die Frequenz kann dabei zwischen 50 kHz und 10 MHz liegen, wobei die Feldstärke so gewählt wird, dass das Produkt aus der Frequenz und dem Quadrat der Feldstärke zwischen 0.1 und 1000 MHz (kA/m)² liegt. Durch dieses Wechselfeld kommt es zu einer induktiven Erwärmung der Kompositpartikel. Dadurch wird auch die Umgebung der Kompositpartikel erwärmt. Dadurch kann es zur Absenkung der Viskosität einer umgebenden Flüssigkeit oder sogar zum Verdampfen leichtflüchtiger Bestandteile kommen. So können diese Bestandteile abgetrennt oder extrahiert werden. Alternativ kann auch die Viskosität einer durchtretenden Flüssigkeit abgesenkt werden. Dadurch kann beispielsweise der Durchfluss einer Ölquelle gesteigert werden. Im Falle von partikulären Materialien kann die Phasentrennung erleichtert werden.

Das Feld kann kontinuierlich oder auch gepulst angelegt werden, um einer Überhitzung zu vermeiden.

Im Falle der Aufreinigung von partikulären Materialien, beispielsweise ölhaltige Sande, werden die Materialien mit den Kompositpartikeln vermengt, beispielsweise in einem Anteil von 5:1 bis 1:5 nach Gewicht. Der Anteil kann sich dabei nach der benötigten Wärmeentwicklung richten, je geringer die Temperatur, desto geringer muss der Anteil der Kompositpartikel sein. Bei der Erwärmung durch das Anlegen einer Wechselfeldes können zum einen flüchtige Anteile destillativ entfernt werden, zum anderen können verflüssigte Anteile beispielsweise durch Zentrifugation angetrennt werden. Optional kann das partikuläre Material durch mit einem leichtflüchtigen Lösungsmittel weiter gereinigt werden. Solche Lösungsmittel weisen einen Siedepunkt von zwischen 30 °C und 200 °C, bevorzugt zwischen 50 und 150 °C auf. Solche Lösungsmittel sind z.B. C₁₋₅-Ketone, wie Aceton, Propanon; Ether, wie Diethylether, tert-Butylmethylether, Tetrahydrofuran; Alkane, wie n-Pentan, n-Hexan; Halogenierte Alkane. Dieses leichtflüchtige Lösungsmittel lässt sich danach durch erneutes Erwärmen leicht entfernen. Es können auch Gemische von Lösungsmitteln verwendet werden.

Die Kompositpartikel können nach dem Verfahren magnetisch vom gereinigten Material abgetrennt und wiederverwendet werden.

Die Erfindung betrifft außerdem einen Proppant umfassend die beschriebenen magnetischen Kompositpartikel, bevorzugt entspricht der Proppant einem magnetischen Kompositpartikel.

Die Erfindung betrifft außerdem die Verwendung der magnetischen Kompositpartikel zur Erzeugung von Wärme durch Anlegen eines äußeren magnetischen Wechselfeldes, insbesondere zur Abdestillation oder Verflüssigung von flüchtigen oder verflüssigbaren Bestandteilen in Gemischen. Dies kann beispielsweise dadurch geschehen, dass man die Partikel mit dem Gemisch, welche bevorzugt ein partikuläres Material, vermischt. Durch das Anlegen eines Wechselfeldes wird im Gemisch Wärme erzeugt. Dies hat den Vorteil, dass die Erwärmung gleichmäßig im Gemisch stattfindet, ohne dass große Wärmeunterschiede entstehen, welche beispielsweise zur Zersetzung der Substanzen führen können. Auch muss während der Erwärmung nicht gerührt oder durchmischt werden. Eine Durchmischung kann allerdings das Austreten der abzutrennenden Substanz erleichtern. Für diese Anwendung sind Kompositpartikel mit einem Durchmesser von über 1 mm, bevorzugt über 3 mm, z.B. zwischen 3 bis 10 mm oder 2 bis 5 mm geeignet.

Die Erfindung betrifft außerdem die Verwendung der magnetischen Kompositpartikel als Proppants oder zur Abtrennung oder Extraktion von flüssigen oder verflüssigbaren Anteilen aus geologischen Formationen oder partikulären Materialien, beispielsweise zur Reinigung von ölhaltigen Sanden, Erhöhung des Durchflusses bei Ölquellen. Die magnetischen Kompositpartikel können als Suspension in die Kluft eingespült werden. Danach kann durch Einbringen eines Wechselfeldgenerators in das Bohrloch dort ein magnetisches Wechselfeld erzeugt werden. Dies führt zu einer Erwärmung direkt in der unterirdischen Formation. Durch die Reichweite des Wechselfeldes kann eine Erwärmung über ein Volumen hinweg erreicht werden. Für diese Anwendung sind Kompositpartikel mit einem Durchmesser von unter 2 mm, z.B. zwischen 0.5 und 1 mm geeignet. Dadurch bleiben Suspensionen dieser Partikel länger erhalten, damit sich die Partikel beim Einspülen nicht zu schnell absetzen.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

### Beispiel 1: Herstellung von Magnesiumferrit-Pulver

Magnesiumacetat und Eisen(III)-citrat werden separat in einer Konzentration von jeweils 1 Mol/l in entionisiertem Wasser gelöst. Gleiche Mengen dieser Lösungen werden miteinander gemischt. Die resultierende Lösung wird im Trockenschrank bei 150 °C eingetrocknet, was in einem dunklen grünlich-braunen Kuchen resultiert. Dieser Kuchen wird trocken in einer Kugelmühle zu einem feinen Pulver mit einer Korngröße im Submikrometerbereich zermahlen. Dieses Pulver wird durch langsames Hochheizen bei einer Temperatur von 300 bis 500 °C pyrolysiert und nachfolgend bei einer Temperatur von 1100 °C gebrannt, wodurch dunkelrotes Magnesiumferritpulver erhalten wird. Das erhaltene Pulver hat eine Partikelgröße zwischen 0.5 und 2 µm (bestimmt mit TEM).

### Herstellung von Kalk-Natron-Silikat-Xerogel

58,5 g Tetraethoxysilan werden vorgelegt. Hierzu werden der Reihe nach 30,5 g Natriumethanolat, 54 g Ethanol und 1,2 g metallisches Calcium gegeben, wobei sich die Mischung erwärmt. Nach Abkühlung wird die Mischung 24 h unter Rückfluss gerührt. Durch Zugabe von 8,3 g Wasser zu 60 g dieses Sols wird eine Gelierung veranlasst. Dieses Gel wird bei 80 °C getrocknet und zu einem feinen Xerogel-Pulver mit einer Korngröße von 0.1 bis 1 µm zermahlen. Dieses wird zur Stabilisierung für 2 Stunden bei 300 °C behandelt.

### Herstellung von Verbund-Kernpartikeln

Das Magnesiumferritpulver und das Kalk-Natron-Silikat-Xerogel werden im Gewichtsverhältnis 2:1 miteinander gemischt. Zu dieser Mischung wird zehnprozentige Glukoselösung in langsam zunehmender Menge gegeben, bis eine pastöse, makroskopisch homogene Masse entsteht. Diese Masse wird durch eine Spritze zu Strängen extrudiert, welche dann zwischen zwei mit Rillen versehenen Platten zu etwa 2 mm großen Kugeln gerollt werden (Durchmesser +/- 1 mm). Diese Kugeln werden bei 1100 °C gebrannt.

### Beschichtung der Kernpartikel

Die gebrannten Kernpartikel werden mit einem Natriumsilkatsol (NaSi, gemäß DE 197 14 949 Beispiel 2: 25 ml (124,8 mMol) Methyltriethoxysilan (MTEOS) werden mit 7 ml (31,4 mMol) Tetraethoxysilan (TEOS) und 0,8 g (20 mMol) Natriumhydroxid über Nacht (mindestens 12 Stunden) bei Raumtemperatur gerührt, bis sich das gesamte Natriumhydroxid gelöst hat und eine klare gelbe Lösung vorliegt; Anschliessend werden 3,2 ml (177,8 mMol) Wasser bei Raumtemperatur langsam zugetropft, wobei sich die Lösung erwärmt. Nach Beendigung der Wasserzugabe wird die klare gelbe Lösung bei Raumtemperatur gerührt, bis sie wieder abgekühlt ist, und anschließend über einen Filter mit einer Porengrösse von 0,8 µm filtriert.) benetzt und im noch nassen Zustand in ein Bett aus Kalk-Natron-Silikat-Xerogel (s.o.) fallen gelassen und sofort mit ebendiesem Pulver überdeckt. Durch Trocknen entsteht dadurch eine Hülle aus pulverförmigem Kalk-Natron-Silikat-Xerogel, das durch eine kontinuierliche Phase von Natriumsilikat-Xerogel gebunden ist. Beim Ausheizen bei 700 °C schmilzt diese Hülle zu einem zusammenhängenden, dichten und chemikalienbeständigen Film von 3 bis 5 µm Dicke.

Die Dichtheit und Beständigkeit der Hülle wurde durch einen Auslaugversuch in verdünnter Salzsäure nachgewiesen, bei dem über Wochen keine Verfärbung des Auslaugemediums zu beobachten war. Im Gegensatz dazu tritt bei unbeschichteten Kernpartikeln schon im Verlauf von einigen Sekunden eine kräftige Gelbfärbung auf.

### Beipiel 2: Herstellung beschichteter magnetischer Verbundpartikel

### Herstellung der Kernpartikel

Kalk-Natron-Silikat-Xerogel wird mit Eisen(III)-oxid (Hämatit; über chemische Fällung hergestelltes Rotpigment) und Magnesiumhydroxid vermischt, so dass dieselben Molverhältnisse wie in Beispiel 1 resultieren. Die Mischung wird im Intensivmischer (Eirich TR-02) gemischt und dabei langsam zehnprozentige Glukoselösung zugegeben, bis sich weitgehend sphärische Agglomerate von wenigen Millimetern Durchmesser bilden. Diese Agglomerate werden zunächst bei 80 °C im Trockenschrank getrocknet, wodurch kugelförmige Grünkörper erhalten werden.

### Beschichtung und Ausheizen

Ein Bett aus feinverteiltem SiO₂ (Aerosil Ox50) wird in einer flachen Wanne vorbereitet. In dieses werden einzelne Grünkörper mit ausreichendem Abstand zueinander eingebracht und mit einer weiteren Lage Aerosil überdeckt. Durch leichten Druck wird diese Anordnung verdichtet und dann bei 1100 °C ausgeheizt. Die geschmolzene Glasmatrix löst dabei die das umgebende SiO₂-Pulver an und verbindet sich mit diesem zu einer dichten Hülle.

### Beispiel 3: Destillation der leichtflüchtigen Ölfraktion aus einer Ölsandprobe

Eine Probe von ca. 5 g Ölsand wurde mit ca. 15 g magnetischer Verbundpartikel aus Beispiel 2 versetzt und in ein großes Rollrandglas gefüllt. Dieses wurde dem Magnetfeld eines RF-Generators (Linn HTG 750/0.5) ausgesetzt, wobei die Feldstärke des äußeren Feldes mit ca. 6 kA/m (Effektivwert) bei ca. 220 kHz weit unterhalb der maximalen Leistungsfähigkeit des Generators blieb. Innerhalb von 1-2 Minuten wurde eine starke Freisetzung gasförmiger Komponenten beobachtet, die sich im oberen, kalten Bereich des Rollrandglases als gelblicher Flüssigkeitsfilm niederschlugen. Die erreichte Temperatur wurde nach dem Abschalten des Generators durch Einführen eines Thermoelements überprüft. Dabei wurde ein Wert von über 170 °C gemessen.

Der Versuch mit magnetischen Verbundpartikeln aus Beispiel 2, welche ohne Beschichtung bei 1100 °C wärmebehandelt wurden, ergab das gleiche Ergebnis.

### zitierte Literatur

EP 1 232 502 B1
DE 196 14 136 A1
DE 199 40 220 A1
DE 195 20 964 A1
DE 19 41 191
DE 37 19 339
DE 41 17 041
DE 42 17 432
C. J. Brinker, G. W. Scherer: "Sol-Gel Science - The Physics and Chemistry of Sol-Gel-Processing", Academic Press, Boston, San Diego, New York, Sydney (1990)

## Patentansprüche

1. Magnetische Kompositpartikel, **dadurch gekennzeichnet, dass** die Kompositpartikel mindestens ein magnetisches Objekt und eine glasartige Binderphase umfassen und die Kompositpartikel einen Durchmesser zwischen 0.2 und 20 mm aufweisen und der Anteil der magnetischen Objekte im Verhältnis zur Binderphase gemessen nach Gew.-% zwischen 1:1 und 4:1 beträgt.

2. Magnetische Kompositpartikel nach Anspruch 1, **dadurch gekennzeichnet, dass**
das magnetische Objekt aus einem ternären Eisenoxid aus der Klasse der Weichferrite besteht.

3. Magnetische Kompositpartikel nach einem der Ansprüche 1 oder 2, **dadurch gekennzeichnet, dass**
das magnetische Objekt ein ternäres Eisenoxid der Formel MFe₂O₄ umfasst, wobei M ausgewählt ist aus der Gruppe Cr, Ga, Cd, Mg, Mn, Li, Ca, Ni, Co, Cu, Zn, Zr oder Fe(II).

4. Magnetische Kompositpartikel nach einem der Ansprüche 1 bis 3, **dadurch gekennzeichnet, dass**
die Kompositpartikel mit einer glasartigen Schicht beschichtet sind.

5. Magnetische Kompositpartikel nach Anspruch 4, **dadurch gekennzeichnet, dass**
die glasartige Schicht eine Dicke von über 0.5 µm aufweist.

6. Verfahren zur Herstellung von magnetischen Kompositpartikeln nach einem der Ansprüche 1 bis 3 umfassend folgende Schritte:
a) Herstellen einer Zusammensetzung aus mindestens einem magnetischem Objekt und/oder einem Precursor für ein magnetisches Objekt und mindestens einem Precursor einer glasartigen Binderphase;
b) Herstellen eines Granulats aus der Zusammensetzung;
c) Wärmebehandlung des Granulats, wobei sich die glasartige Binderphase bildet,
wobei das wärmebehandelte Granulat einen Durchmesser von 0.2 bis 20 mm aufweist und der Anteil der magnetischen Objekte im Verhältnis zur Binderphase gemessen nach Gew.-% zwischen 1:1 und 4:1 beträgt.

7. Verfahren nach Anspruch 6, **dadurch gekennzeichnet, dass** die Wärmebehandlung bei über 500 °C durchgeführt wird.

8. Verfahren nach einem der Ansprüche 6 bis 7, dadurch gekennzeichnen, dass
das Granulat in einem weiteren Schritt mit mindestens einem Precursor für eine glasartige Schicht, umfassend mindestens ein Pulver, beschichtet wird und danach wärmebehandelt wird, wobei dieser Schritt auch vor Schritt c) erfolgen kann, und in Schritt c) eine Wärmebehandlung des Granulats und des Pulvers durchgeführt wird.

9. Proppant umfassend magnetische Kompositpartikel nach einem der Ansprüche 1 bis 5.

10. Verfahren zur Abtrennung oder Extraktion von flüssigen oder verflüssigbaren Anteilen aus geologischen Formationen oder partikulären Materialien umfassend folgende Schritte:
a) Einbringen von magnetischen Kompositpartikeln nach einem der Ansprüche 1 bis 5 in die geologischen Formationen oder partikulären Materialien;
b) Induktive Erwärmung der magnetischen Kompositpartikel durch Anlegen eines äußeren magnetischen Wechselfeldes;
c) Abtrennung oder Extraktion der flüssigen oder verflüssigten Anteile.

11. Verwendung von magnetischen Kompositpartikeln nach einem der Ansprüche 1 bis 5 zur Erzeugung von Wärme durch Anlegen eines äußeren magnetischen Wechselfelds.

12. Verwendung von magnetischen Kompositpartikeln nach einem der Ansprüche 1 bis 5 als Proppants.

## Claims

1. Magnetic composite particles, **characterized in that** the composite particles comprise at least one magnetic object and a vitreous binder phase and the composite particles have a diameter between 0.2 and 20 mm and the proportion of the magnetic object in relation to the vitreous binder phase, measured by % by weight, is between 1:1 and 4:1.

2. Magnetic composite particles according to claim 1, **characterized in that** the magnetic object consist of a ternary iron oxide from the class of the soft ferrites.

3. Magnetic composite particles according to one of claims 1 or 2, **characterized in that** the magnetic object comprises a ternary iron oxide of the formula MFe₂O₄ where M is selected from the group consisting of Cr, Ga, Cd, Mg, Mn, Li, Ca, Ni, Co, Cu, Zn, Zr or Fe(II).

4. Magnetic composite particles according to one of claims 1 to 3, **characterized in that** the composite particles are coated with a vitreous layer.

5. Magnetic composite particles according to claim 4, **characterized in that** the vitreous layer has a thickness of more than 0.5 µm.

6. A process for producing magnetic composite particles according to one of claims 1 to 3, comprising following steps:
a) producing a composition from at least one magnetic object and/or a precursor for a magnetic object and at least one precursor for a vitreous binder phase;
b) producing granules from the composition;
c) heat treating the granules to form the vitreous binder phase,
wherein the heat-treated granules have a diameter between 0.2 and 20 mm and the proportion of the magnetic objects in relation to the vitreous binder phase, measured by % by weight, is between 1:1 and 4:1.

7. The process according to claim 6, **characterized in that** the heat treatment is conducted at more than 500°C.

8. The process according to one of claims 6 to 7, **characterized in that** the heat-treated granules are coated in a further step with at least a precursor for a vitreous layer, comprising at least a powder, and then heat-treated, wherein this step can also take place before step c), and in step c), a heat-treatment of the granules and the powder is conducted.

9. A proppant comprising magnetic composite particles according to one of claims 1 to 5.

10. A process for removing or extracting liquid or liquefiable components from geological formations or particulate materials, comprising following steps:
a) introducing magnetic composite particles as claimed in one of claims 1 to 5 into geological formations or particulate materials;
b) inductively heating the magnetic composite particles by applying an external magnetic alternating field;
c) removing or extracting liquid or liquified components.

11. The use of magnetic composite particles as claimed in one of claims 1 to 5 for generation of heat by application of an external magnetic alternating field.

12. The use of magnetic composite particles as claimed in one of claims 1 to 5 as proppants.

## Revendications

1. Particules composites magnétiques, **caractérisées en ce que** les particules composites comprennent au moins un objet magnétique et une phase vitreuse de liant et les particules composites présentent un diamètre entre 0,2 et 20 mm et la proportion des objets magnétiques par rapport à la phase de liant, mesurée en % en poids, est située entre 1:1 et 4:1.

2. Particules composites magnétiques selon la revendication 1, **caractérisées en ce que** l'objet magnétique est constitué par un oxyde de fer ternaire de la classe des ferrites douces.

3. Particules composites magnétiques selon l'une quelconque des revendications 1 ou 2, **caractérisées en ce que** l'objet magnétique comprend un oxyde de fer ternaire de formule MFe₂O₄, M étant choisi dans le groupe formé par Cr, Ga, Cd, Mg, Mn, Li, Ca, Ni, Co, Cu, Zn, Zr ou Fe(II).

4. Particules composites magnétiques selon l'une quelconque des revendications 1 à 3, **caractérisées en ce que** les particules composites sont revêtues d'une couche vitreuse.

5. Particules composites magnétiques selon la revendication 4, **caractérisées en ce que** la couche vitreuse présente une épaisseur supérieure à 0,5 µm.

6. Procédé pour la préparation de particules composites magnétiques selon l'une quelconque des revendications 1 à 3, comprenant les étapes suivantes :
a) préparation d'une composition d'au moins un objet magnétique et/ou un précurseur pour un objet magnétique et d'au moins un précurseur pour une phase vitreuse de liant ;
b) préparation d'un granulat à partir de la composition ;
c) traitement thermique du granulat, la phase de vitreuse de liant se formant,
le granulat traité thermiquement présentant un diamètre de 0,2 et 20 mm et la proportion des objets magnétiques par rapport à la phase de liant, mesurée en % en poids, étant située entre 1:1 et 4:1.

7. Procédé selon la revendication 6, **caractérisé en ce que** le traitement thermique est réalisé à plus de 500°C.

8. Procédé selon l'une quelconque des revendications 6 à 7, **caractérisé en ce que** le granulat est revêtu, dans une autre étape, par au moins un précurseur pour une couche vitreuse, comprenant au moins une poudre, et est ensuite traité thermiquement, cette étape pouvant également avoir lieu avant l'étape c) et un traitement thermique du granulat et de la poudre étant réalisé dans l'étape c).

9. Agent de soutènement comprenant des particules composites magnétiques selon l'une quelconque des revendications 1 à 5.

10. Procédé pour la séparation ou l'extraction de proportions liquides ou liquéfiables de formations géologiques ou de matériaux particulaires, comprenant les étapes suivantes :
a) introduction de particules composites magnétiques selon l'une quelconque des revendications 1 à 5 dans les formations géologiques ou les matériaux particulaires ;
b) chauffage par induction des particules composites magnétiques par application d'un champ magnétique alternatif externe ;
c) séparation ou extraction des proportions liquides ou liquéfiées.

11. Utilisation de particules composites magnétiques selon l'une quelconque des revendications 1 à 5 pour la production de chaleur par application d'un champ magnétique alternatif externe.

12. Utilisation de particules composites magnétiques selon l'une quelconque des revendications 1 à 5 comme agents de soutènement (proppants).
